(19) Europäisches Patentamt
European Patent Office
Office européen des brevets

(11) Veröffentlichungsnummer: **0 459 281 A2**

# (12) EUROPÄISCHE PATENTANMELDUNG

(21) Anmeldenummer: **91108231.1**

(51) Int. Cl.$^5$: **G02F 1/1333**, C09K 19/52

(22) Anmeldetag: **22.05.91**

(30) Priorität: **29.05.90 DE 4017212**
**29.06.90 DE 4020740**

(43) Veröffentlichungstag der Anmeldung:
**04.12.91 Patentblatt 91/49**

(84) Benannte Vertragsstaaten:
**DE GB**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Poetsch, Eike, Dr.**
**Am Buchwald 4**
**W-6109 Mühltal(DE)**
Erfinder: **Finkenzeller, Ulrich, Dr.**
**Waldpfad 74**
**W-6831 Plankstadt(DE)**
Erfinder: **Ohngemach, Jörg, Dr.**
**Taubenstrasse 6**
**W-6107 Reinheim(DE)**

## (54) Verfahren zur Herstellung mikroverkapselter Flüssigkristalle.

(57) Die Erfindung betrifft ein Verfahren zur Herstellung von Flüssigkristall-Mikrokapseln, wobei Tröpfchen, enthaltend den Flüssigkristall und Monomere bzw. Präpolymere des verkapselnden Polymers oder den Flüssigkristall in einer Schmelze des verkapselnden Polymers oder eine Lösung des verkapselnden Polymers und des Flüssigkristalls in einem Lösungsmittel, in der Gasphase erzeugt werden und anschließend die Phasentrennung induziert wird.

EP 0 459 281 A2

Die Erfindung betrifft ein Verfahren zur Herstellung von Flüssigkristall-Mikrokapseln.

Mikroverkapselte Flüssigkristalle sind von großem Interesse für die Herstellung von Displays, elektrisch schaltbaren Großflächen, wie z.B. Fenstern, Anzeigen, Reklametafeln, für die Erzeugung von Farbeffekten auf textilen Geweben, für kosmetische Anwendungen, für Temperaturanzeigen und für weitere, hier nicht explizit aufgeführte Anwendungen.

Bei den bisherigen Verfahren sind die mikroverkapselten Flüssigkristalle im allgemeinen in einer folienartigen Polymermatrix fixiert. So wird z.B. in US 4,435,047 die Herstellung von NCAP-Folien beschrieben (NCAP = nematic curvilinear aligned phases), bei der das verkapselnde polymere Material, wie z.B. Polyvinylalkohol, die Flüssigkristallmischung und ein Trägermaterial, wie z.B. Wasser, in einer Kolloidmühle innig vermischt werden und das Trägermaterial anschließend durch Trocknung entfernt wird. Demgegenüber wird bei der z.B. in EP 0,272,582 und US 4,688,900 beschriebenen Herstellung von PDLC-Filmen (PDLC = polymer dispersed liquid crystals) die Flüssigkristallmischung zunächst mit Monomeren oder Oligomeren des matrixbildenden Materials homogen vermischt. Anschließend wird die Mischung polymerisiert und die Phasentrennung induziert, wobei zwischen TIPS (= temperature-induced phase separation), SIPS (= solvent-induced phase separation) und PIPS (= polymer-induced phase separation) unterschieden wird (Mol. Cryst. Liq. Cryst. Nonlin. Opt. 157 (1988) 427).

Bei einem anderen Verfahren, das z.B. in US 3,585,381 beschrieben ist, wird die Flüssigkristallmischung z.B. in eine wäßrige Gelatine-Lösung gegeben und etwa in einer Kolloidmühle solange gerührt, bis Flüssigkristalltröpfchen in der gewünschten Größe (z.B. 15-30 µm) erhalten werden. Diese Lösung wird bei etwa 50 °C zu einer wäßrigen Lösung von Gummi-Arabikum zugegeben, wodurch eine wäßrige Aufschlämmung von freien oder oder vielfach miteinander zu kleineren Einheiten verclusterten Mikrokapseln resultiert.

Die aus einer Polymermatrix mit eingebetteten Flüssigkristalltröpfchen bestehenden Folien sind insbesondere für elektrooptische Anwendungen geeignet, da die Elektroden z.B. auf die Folie aufgebracht werden können oder die Folie sich zwischen mit Elektrodenschichten versehenen Glassubstraten befinden kann. Andererseits sind derartige Folien weniger für die Aufbringung auf textilen Geweben, für kosmetische Anwendungen, zur Erzeugung von Tinten und vergleichbare Anwendungen geeignet.

Demgegenüber können diskrete, frei vorliegende Flüssigkristall-Mikrokapseln sowohl für die zuletzt angeführten Anwendungen als auch für elektrooptische Systeme verwendet werden, wo die Kapseln z.B. in einer Aufschlämmung zwischen mit Elektrodenschichten versehene Glassubstrate gebracht werden.

Bei den Verfahren zur Herstellung von Folien mit mikroverkapselten Flüssigkristallen ist eine Trennung der in der Polymermatrix fixierten Tröpfchen nicht möglich. Bei dem in US 3,585,381 beschriebenen Verfahren können die Flüssigkristall-Mikrokapseln nach erfolgter Härtung des verkapselnden Materials (z.B. Zugabe von Glutaraldehyd) aus der Aufschlämmung isoliert werden und einem einfachen, klassischen Trennverfahren wie z.B. Windsichten unterworfen werden. Dieses Verfahren zur Herstellung diskreter Kapseln ist jedoch sehr umständlich und langwierig und es wird, insbesondere auch bedingt durch die Neigung der Kapseln zur Clusterbildung, eine sehr breite Verteilung von Kapseldurchmessern erhalten. Außerdem müssen bei diesem Verfahren die Eigenschaften von Flüssigkristallmischung, verkapselndem Material und Lösungsmittel sehr genau aufeinander abgestimmt sein, wodurch ein nur sehr enger Spielraum bei der Auswahl des Verkapselungsmaterials resultiert.

Der Erfindung lag die Aufgabe zugrunde, ein Verfahren zur Herstellung von nicht in einer Matrix fixierten mikroverkapselten Flüssigkristallen anzugeben, welches den entsprechenden Anforderungen besser gerecht wird und das die geschilderten Nachteile herkömmlicher Systeme nicht oder nur in geringem Umfang aufweist.

Es wurde nun gefunden, daß diese Aufgabe durch die Bereitstellung des erfindungsgemäßen Verfahrens gelöst werden kann, bei dem zunächst Tröpfchen, enthaltend den Flüssigkristall und Monomere und/oder Präpolymere des verkapselnden Polymers oder den Flüssigkristall in einer Schmelze des verkapselnden Polymers oder eine Lösung des verkapselnden Polymers und des Flüssigkristalls in einem Lösungsmittel, in der Gasphase erzeugt werden.

Diese Tröpfchen werden üblicherweise mit Zerstäubern erzeugt, bei denen die den Flüssigkristall und Monomere und/oder Präpolymere enthaltende Mischung oder die den Flüssigkristall enthaltende Schmelze oder die Lösung des verkapselnden Materials und des Flüssigkristalls in einem Lösungsmittel durch Zerstäubungsdüsen gedrückt wird. Die Tröpfchen können weiter dadurch gebildet werden, daß in eine mit Monomeren und/oder Präpolymeren übersättigte Gasphase Tröpfchen eingesprüht werden, die den Flüssigkristall enthalten. Die Injizierung von Monomere und/ oder Präpolymere enthaltenden Tröpfchen in eine mit dem Flüssigkristall übersättigte Gasphase ist ebenfalls möglich, jedoch wegen der dabei entstehenden "inversen Tröpfchenstruktur" im allgemeinen nicht bevorzugt.

Die mittlere Tröpfchengroße wird wesentlich von dem Durchmesser der Löcher der Zerstäuberdüsen , von dem Förderdruck, von der Dichte, der Viskosität und der Kohäsion der zerstäubten Ausgangsmischung

und darüber hinaus auch noch weiteren Parametern beeinflußt. Durch geeignete Wahl der hier explizit genannten und ggf. auch noch weiterer Parameter kann der mittlere Tröpfchendurchmesser in einem weiten Bereich variiert und im Hinblick auf die jeweilige Anwendung optimiert werden. Die mittleren Tröpfchendurchmesser werden jedoch vorzugsweise nicht zu groß und insbesondere nicht größer als 100 $\mu$m gewählt. Sehr große Tröpfchen fallen aufgrund ihres großen Gewichts rasch nach unten, so daß die Aufenthaltsdauer in der Gasphase häufig für die Induzierung der Phasentrennung und die nachfolgende Polymerisation nicht ausreicht; auch wenn die Phasentrennung an einer festen oder flüssigen Grenzphase wie z.B. Glas, Metall oder Kunststoff® erfolgt, an der die Tröpfchen adsorbiert sind, sind zu große Tröpfchendurchmesser unvorteilhaft, da dann häufig eine starke Deformation oder in Extremfällen sogar ein Zerfließen der Tröpfchen beobachtet wird. Der mittlere Tröpfchendurchmesser ist besonders bevorzugt kleiner als 70 $\mu$m und insbesondere nicht größer als 55 $\mu$m Ganz besonders bevorzugt ist für den mittleren Tröpfchendurchmesser $\bar{a}$ das Intervall 0,1 $\mu$m $\leqq \bar{d} \leqq$ 20 $\mu$m und insbesondere das Intervall 0,25 $\mu$m $\leqq \bar{d} \leqq$ 15 $\mu$m.

Die in der Gasphase gebildeten Tröpfchen enthalten vorzugweise Monomere und/oder Präpolymere des verkapselnden Materials, den Flüssigkristall, der weitere Zusätze wie z.B. Farbstoffe, chirale Dotierstoffe, Zusätze zur Veränderung der Viskosität usw. enthalten kann, weiter ggf. Polymerisationsinitiatoren, Lösungsmittel und andere Zusätze. Die Zusammensetzung der Tröpfchen kann zunächst weitgehend homogen sein, was z.B. der Fall ist, wenn die zerstäubte Ausgangsmischung alle Komponenten der Tröpfchen enthält. Werden dagegen z.B. in eine mit Monomeren bzw. Präpolymeren des verkapselnden Materials übersättigte Gasphase Flüssigkristalltröpfchen injiziert, an denen sich eine umhüllende Schicht des verkapselnden Materials niederschlägt, liegt bereits vor Einleiten der Polymerisation eine dem verkapselten Tröpfchen weitgehend analoge Struktur vor. Die Polymerisation des verkapselnden Materials kann durch Polyaddition, Polykondensation oder Photopolymerisation unter Einwirkung von thermischer Energie oder Strahlungsenergie erfolgen.

Bei der Polyaddition werden z.B. Polyisocyanate mit Polyalkoholen oder Epoxidharze mit Polyaminen oder Polyamiden unter Wärmeeinwirkung umgesetzt. Als Beispiel für eine geeignete Polykondensation kann die Umsetzung von Melaminharzen mit OH-, COOH- und $CONH_2$-Gruppen tragenden Verbindungen angeführt werden. Bei der Photopolymerisation kann zwischen radikalischer Photopolymerisation und kationischer Photopolymerisation unterschieden werden.

Nach dem radikalischen Photopolymerisationsmechanismus werden z.B. ungesättigte Polyester mit Styrol und einem geeigneten Photoinitiator oder oligomere Acrylate mit monomeren Acrylaten, ebenfalls unter Zusatz eines geeigneten Photoinitiators, umgesetzt, während als Beispiel für eine kationische Photopolymerisation die Umsetzung von Epoxiden mit Vinylether in Anwesenheit eines Photoinitiators angeführt werden kann.

Im folgenden sind einige für diese Umsetzungen besonders geeignete Edukte aufgeführt:

1. Polyaddition

1.1 Polyisocyanate + Polyalkohole (Thermische Härtung)

| | |
|---|---|
| Polyisocyanate: | Z.B. Homologe des Diphenylmethan-4,4-diisocyanats (Handelsprodukte sind z.B. Desmodur VL und Desmodur VL-10 von der Firma Bayer) |
| Polyalkohole: | Z.B. OH-Gruppen tragende Polyester, Polyether und Polycarbonate (Handelsprodukte sind z.B. Desmophen 250 U oder Desmophen 550 U von der Firma Bayer). |

1.2 Epoxidharze + Polyamine bzw. Polyamide
(Thermische Härtung)

| | |
|---|---|
| Epoxidharze: | Z.B. Verbindungen auf der Basis von Bisphenol A (Handelsprodukte sind z.B. die Araldit-Typen von der Firma Ciba-Geigy) |
| Polyamine: | Z.B. EDA, DETA oder cycloaliphatische und heterocyclische Polyamine (Handelsprodukte sind z.B. Laromin A 327 = Dipropylentriamin, Laromin C 252 oder 260 = cycloaliphatische Polyamine) |
| Anmerkungen: | Epoxidharze lassen sich auch mit Harzen, die reaktionsfähige OH-Gruppen enthalten (wie Harnstoff-, Melamin- oder Phenolharze und organischen Säuren) bei erhöhter Temperatur vernetzen. |

2. Polykondensation

2.1 Melaminharze + OH-, COOH- und $CONH_2$-Gruppen tragende Verbindungen

| | |
|---|---|
| Melaminharze: | Z.B. Hexakis(methoxymethyl)melamin (HMMM) und entsprechende, mit Butanol veretherte Produkte. (Handelsprodukt ist z.B. Cymel 303 der Firma Dyno Cyanamid) |
| Reaktionspartner: | können z.B. Polyester, Polyether oder Epoxidharze sein, die die o.a. funktionellen Gruppen tragen. (Handelsprodukt ist z.B. Luprenal LR 8491 der Firma BASF, ein carboxyliertes Polyesterharz.) |
| Anmerkung: | Die Reaktion wird durch Säuren (z.B. Para-Toluol-Sulfonsäure) katalysiert. |

3. Photopolymerisation

3.1 Radikalische Photopolymerisation

3.1.1 Ungesättigte Polyester + Styrol + Photoinitiator

| | |
|---|---|
| Ungesättigte Polyester: | Handelsprodukte sind z.B. Roskydal 550 und Roskydal 502 von der Firma Bayer. |
| Photoinitiatoren: | Z.B. Benzildimethylketal oder Benzoinether (Handelsprodukte sind z.B. Irgacure 651 von der Firma Ciba-Geigy und Lucirin BDK der Firma BASF). |

3.1.2 Oligomere Acrylate + monomere Acrylate + Photoinitiator

| | |
|---|---|
| Oligomere Acrylate: | Dabei handelt es sich z.B. um oligomere Epoxidacrylate, oligomere Urethanacrylate und oligomere Polyesteracrylate. (Handelsprodukte sind z.B. Laromer EA 81, Laromer LR 8739 oder Laromer PE 55 F). |
| Monomere Acrylate: | 1,6-Hexandioldiacrylat, Trimethylolpropantriacrylat u.a. |
| Photoinitiatoren: | Z.B. Aryl-(2-hydroxy-2-propyl)-keton (Handelsprodukte sind z.B. Darocure 1173 oder 1116 der Firma E. Merck) |

3.2 Kationische Photopolymerisation

3.2.1 Epoxide + Vinylether + Photoinitiator

| | |
|---|---|
| Epoxide: | z.B. Aliphatische oder cycloaliphatische Epoxide und Glycidylether. (Handelsprodukte sind u.a. Degacure K 126 der Firma Degussa und Cyracure UVR 6110 von der Firma Union Carbide Corp.) |
| Photoinitiatoren: | z.B. Triarylsulfoniumsalze (Handelsprodukte sind u.a. Degacure KI 85 der Firma Degussa, Cyracure UVI 6974, ein Triarylsulfoniumsalz von der Firma Union Carbide Corp. und FX 512, das Triphenylsulfoniumhexafluorophosphat von der Firma 3M) |

Auch bei thermisch gestarteten Polymerisationsreaktionen kann die Zugabe eines Initiators wie z.B. von Azodiisobutyronitril vorteilhaft sein.

Als verkapselndes Material sind weiter Organo-Silanverbindungen der Formel (A) bevorzugt

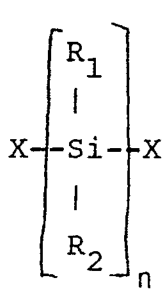

(A)

worin X H oder Halogen, n ≧ 1 und $R_1$ und $R_2$ organische Gruppen bedeuten; die Verbindungen der Formel (A) werden in der Gasphase z.B. in Anwesenheit von Hg-Dampf als Initiator durch Bestrahlung z.B. mit UV-Licht photopolymerisiert.

Weitere zur Verkapselung geeignete Monomere und/oder Präpolymere sowie Initiatoren sind z.B. auch in US 3,935,337, EP 0,313,053, EP 0,272,585, US 4,688,900 beschrieben. Die in diesen Dokumenten und auch die oben explizit angeführten polymerisierbaren Materialien snd jedoch nur beispielhaft zu verstehen; sie sollen die Erfindung erläutern, jedoch keinesfalls begrenzen. Die Art des verkapselnden Materials ist weigehend unkritisch und kann z.B. im Hinblick auf die gewünschten Kapseleigenschaften in einem weiten Bereich variiert und optimiert werden.

Mit der einsetzenden Polymerisation nimmt die Mischbarkeit des Flüssigkristalls mit dem verkapselnden Material ab und es wird eine Phasentrennung dergestalt beobachtet, daß der Flüssigkristall von einer Polymerhülle umschlossen ist. Besonders bevorzugt sind Photopolymerisationsverfahren, bei denen die gebildeten Tröpfchen mit einer geeigneten Lichtquelle bestrahlt werden. Weiterhin bevorzugt sind erfindungsgemäße Verfahren, bei den die Tröpfchen in einen beheizten Reaktionsraum gesprüht werden.

Die bisher beschriebene bevorzugte Ausgestaltung des erfindungsgemäßen Verfahrens basiert darauf, daß in den in der Gasphase gebildeten Tröpfchen die Phasentrennung durch Polymerisation erfolgt (PIPS = polymer induced phase separation).

Es ist jedoch auch möglich, daß die zu zerstäubende Ausgangsmischung eine Lösung des Flüssigkristalls und ggf. weiterer Zusätze in einer Schmelze des verkapselnden Polymers ist. In den erzeugten Tröpfchen kommt es dann infolge der Abkühlung im Reaktionsraum, der z.B. auf Raumtemperatur oder insbesondere auf niedrigeren Temperaturen gehalten wird, zur Phasentrennung. Dieses Verfahren zur Herbeiführung der Phasentrennung wird auch als TIPS (= temperature induced phase separation) bezeichnet.

Bei einer anderen Ausgestaltung des erfindungsgemäßen Verfahrens wird als zu zerstäubende Ausgangsmischung eine Lösung des verkapselnden Polymers und des Flüssigkristalls und ggf. weiterer Zusätze in einem gebräuchlichen Lösungsmittel verwendet; als Beispiel kann etwa die in US 4,435,047 beschriebene wäßrige Lösung von Polyvinylalkohol und des jeweiligen Flüssigkristalls angeführt werden. Die Tröpfchen werden dann in den Reaktionsraum gesprüht, der vorzugsweise auf Temperaturen gehalten wird, die deutlich über dem Siedepunkt des reinen Lösungsmittels liegen. Durch die Verdampfung des Lösungsmittels wird die Phasenbestimmung und damit die Verkapselung der Flüssigkristalltröpchen induziert (TIPS = thermally induced phase separation).

Die Phasentrennung und/oder Härtung des verkapselnden Materials kann sowohl in der Gasphase oder an einer festen oder flüssigen Grenzpahse wie z.B. Glas, Metall oder Kunststoff, an der die Tröpfchen adsorbiert sind, erfolgen.

Für die Herstellung von frei vorliegenden Flüssigkristall-Mikrokapseln ist es im allgemeinen vorteilhaft, daß die Phasentrennung in der Gasphase induziert wird, da so Tröpfchen von weitgehend idealer Kugelgestalt erhalten werden, während an einer Grenzphase häufig mehr oder weniger starke Deformationen beobachtet werden. Je nach Größe der Tröpfchen und der dadurch beeinflußten Aufenthaltsdauer in der Gasphase wird häufig die Phasentrennung d.h. z.B. die Polymerisation in der Gasphase, nur eingeleitet, während die Durchpolymerisation und/oder die Härtung an einer Grenzfläche erfolgt. Bei manchen Anwendungen hingegen wie z.B. bei der Aufbringung von Flüssigkristall-Mikrokapseln auf textile Gewebe ist ein direktes Aufsprühen der Tröpfchen auf das Substrat häufig vorteilhaft, um unmittelbar eine gleichmäßige Beschichtung des Substrats zu erhalten. In diesem Fall ist die Aufenthaltsdauer der Tröpfchen in der Gasphase sehr kurz und die Phasentrennung läuft überwiegend an der als Grenzfläche anzusehenden Substratoberfläche ab. Es ist natürlich auch möglich, eine Aufschlämmung von freien Flüssigkristall-Mikrokapseln, der ggf. ein geeignetes Bindemittel zugesetzt wird, auf das Substrat aufzusprühen.

Die durch das erfindungsgemäße Verfahren hergestellten Flüssigkristall-Mikrokapseln weisen eine günstige Verteilung der mittleren Kapseldurchmesser auf. Durch Nachschalten sehr einfacher klassischer Trennverfahren wie z.B. Windsichten können praktisch monodisperse Flüssigkristall-Mikrokapseln in vorteilhaften Ausbeuten erhalten werden.

Die Wahl des in den erfindungsgemäßen Flüssigkristall-Mikrokapseln verwendeten Flüssigkristalls ist nicht sehr kritisch. Vorzugsweise werden Flüssigkristalle verwendet, die ausgewählt werden aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene,

Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch lateral substituiert und insbesondere lateral mono- oder difluoriert sein.

Für die verwendeten Flüssigkristalle in Frage kommenden Verbindungen lassen sich weiter durch die Formeln 1, 2, 3, 4 und 5 charakterisieren:

$$R'-L-E-R'' \quad 1$$
$$R'-L-COO-E-R'' \quad 2$$
$$R'-L-OOC-E-R'' \quad 3$$
$$R'-L-CH_2CH_2-E-R'' \quad 4$$
$$R'-L-C{\equiv}C-E-R'' \quad 5$$

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die verwendeten Flüssigkristalle eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in den Verbindungen der Teilformeln 1a, 2a, 3a, 4a und 5a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R" voneinander verschieden, wobei einer dieser Reste meist Alkyl oder Alkenyl ist. In den Verbindungen der Teilformeln 1b, 2b, 3b, 4b und 5b bedeutet R" -CN, $-CF_3$, F, Cl oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäß verwendeten Flüssigkristalle enthalten vorzugsweise neben Komponenten aus der Gruppe der Verbindungen 1a, 2a, 3a, 4a und 5a (Gruppe 1) auch Komponenten aus der Gruppe der Verbindungen 1b, 2b, 3b, 4b, und 5b (Gruppe 2), deren Anteile vorzugsweise wie folgt sind:

Gruppe 1: 0 bis 60 %, insbesondere 5 bis 50 %,
Gruppe 2: 0 bis 60 %, insbesondere 5 bis 40 %.

Die bei dem erfindungsgemäßen Verfahren und in den erfindungsgemäßen Flüssigkristall-Mikrokapseln verwendeten Flüssigkristalle können zur optimalen Anpassung an die jeweilige Anwendung weitere Zusätze enthalten. Es sind z.B. insbesondere für kosmetische oder textile Anwendungen, aber auch für weitere Anwendungen Flüssigkristalle bevorzugt, die pleochroitische Farbstoffe enthalten. Der Farbstoffanteil beträgt vorzugsweise 0-25, insbesondere 0-20 und ganz besonders 0-15 Massenprozente.

Da cholesterische Flüssigkristalle aufgrund ihrer verdrillten Struktur das auf sie fallende Licht selektiv reflektieren (s. z.B. G. W. Gray (ed.), Thermotropic Liquid Crystals, Chichester 1987, S. 121 ff.), können in den erfindungsgemäßen Flüssigkristall-Mikrokapseln auch bei Verwendung von Flüssigkristallmischungen, die chirale flüssigkristalline oder auch nicht flüssigkristalline Dotierstoffe enthalten oder auch ganz auf

chiralen Komponenten basieren, Farbeffekte beobachtet werden, wobei diese wegen der Temperaturabhängigkeit des Pitches i.a. temperaturabhängig sind (Thermochromie); es sind jedoch auch Flüssigkristallmischungen mit weitgehender Temperaturkompensation des Pitches angegeben worden.

Der Mas senanteil der Dotierstoffe an den Flüssigkristallen wird u.a. auch von deren HTP (helical twisting power) bestimmt und kann bis zu 80 % betragen; i.a ist der Anteil der Dotierstoffe jedoch kleiner als 65 % und beträgt insbesondere 1-60 % und insbesondere 5-55 %. Weiter bevorzugt sind Flüssigkristalle mit einem Dotierstoffmassenanteil, der kleiner als 20 % ist. In G.W. Gray, loc. cit., S. 136 ff. sind Beispiele für vollständig aus chiralen Komponenten bestehende Mischungen genannt. Für thermochrome Anwendungen geeignete Mischungen sind weiter z.B. in den britischen Patentanmeldungen GB 8910803.9, GB 8811374.1 und GB 9004161.7 genannt.

Erfindungsgemäße Flüssigkristall-Mikrokapseln mit chiral dotierten oder ganz auf chiralen Komponenten Flüssigkristallmischungen sind bevorzugt. Sie werden bevorzugt für kosmetische, textile oder sonstige dekorative und ästhetische Zwecke verwendet. Weiter werden sie insbesondere auch für Thermometer oder sonstige thermographische Anwendungen, insbesondere auch in der Materialprüfung, oder als Strahlungssensoren verwendet. Weitere Anwendungsmöglichkeiten sind in G. W. Gray, loc. cit., Kap. 5 aufgezeigt.

Weiter können den erfindungsgemäß verwendeten Flüssigkristallen Substanzen zur Optimierung der optischen Anisotropie und/oder, insbesondere bei Display-Anwendungen, zur Optimierung der dielektrischen Anisotropie, der Viskosität, der temperaturabhängigen elektrooptischen Parameter und/oder weitere Parameter der Flüssigkristalle zugesetzt werden.

Derartige Substanzen und auch Beispiele für Dotierstoffe und Farbstoffe sind z.B. in H. Kelker, R. Hatz, Handbook of Liquid Crystals, Verlag Chemie, Weinheim, 1980 und in den DE-OS 22 09 127, 22 40 864, 23 21 632, 23 38 281, 24 50 088, 26 37 430, 28 53 728 und 29 09 177 beschrieben, wobei diese Angaben beispielhaft zu verstehen sind und die Erfindung erläutern sollen, ohne sie jedoch zu begrenzen.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in den den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die folgenden Beispiele sollen die Erfindung erläutern, ohne sie jedoch zu begrenzen.

Es bedeuten:

K: Kristallin-fester Zustand,
S: smektische Phase (der Index kennzeichnet der Phasentyp),
N: nematische Phase:
Ch: cholesterische Phase,
I: Isotrope Phase.

Die zwischen 2 Symbolen stehende Zahl gibt die Umwandlungstemperatur in Grad Celsius an.
Die angegebenen Prozentzahlen sind Massenprozent.

Beispiel 1

Die Flüssigkristallmischung E7 (Handelsprodukt von BDH, Poole, GB) wird mit dem durch UV-Bestrahlung härtbaren Klebstoff NOA 65 (Norland Products) im Verhältnis 1:1,6 bei Raumtemperatur gerührt, bis eine klare Lösung erhalten wird. Diese Mischung wird aus einem Abstand von etwa 1 m auf eine Glasplatte gesprüht, wo die erzeugten Tröpfchen einer etwa 1minütigen UV-Bestrahlung (z.B. UVP, Modell UVL-21) ausgesetzt werden. Es werden Flüssigkristall-Mikrokapseln mit einer vorteilhaften Verteilung der Durchmesser mit einem mittleren Durchmesser von $\bar{d} \cong 50\ \mu m$ erhalten.

## Patentansprüche

1. Verfahren zur Herstellung von Flüssigkristall-Mikrokapseln, dadurch gekennzeichnet, daß Tröpfchen, enthaltend den Flüssigkristall und Monomere bzw. Präpolymere des verkapselnden Polymers oder den Flüssigkristall in einer Schmelze des verkapselnden Polymers oder eine Lösung des verkapselnden Polymers und des Flüssigkristalls in einem Lösungsmittel, in der Gasphase erzeugt werden.

2. Verfahren nach Anspruch 1, dadurch gekennzeichnet, daß die Tröpfchen durch Zerstäubung einer den

Flüssigkristall und Monomere bzw. Präpolymere des verkapselnden Polymers enthaltenden Mischung oder einer den Flüssigkristall enthaltenden Schmelze des verkapselnden Polymers oder einer den Flüssigkristall und das verkapselnde Polymer enthaltenden Lösung erzeugt werden.

3. Verfahren nach Anspruch 1, dadurch gekennzeichnet, daß die Tröpfchen durch Injizierung von Flüssigkristalltröpfchen in eine übersättigte Dampfphase des Monomers bzw. Präpolymers erhalten werden.

4. Verfahren nach einem der Ansprüche 1-3, dadurch gekennzeichnet, daß in Anschluß an die Tröpfchenbildung die Phasentrennung in der Gasphase induziert wird.

5. Verfahren nach einem der Ansprüche 1-3, dadurch gekennzeichnet, daß die in der Gasphase gebildeten Tröpfchen an einer festen oder flüssigen Grenzphase adsorbiert werden, wo dann die Phasentrennung induziert wird.

6. Verfahren nach einem der Ansprüche 4 oder 5, dadurch gekennzeichnet, daß die Phasentrennung durch Einwirken von thermischer Energie, Strahlungsenergie oder durch Polymerisation erzeugt wird.

7. Monodisperse Flüssigkristalltröpfchen, erhältlich nach einem Verfahren der Ansprüche 1-6.

8. Verwendung von monodispersen Flüssigkristalltröpfchen nach Anspruch 7 in elektrooptischen Systemen, Temperaturanzeigen, Farbstoffen, kosmetischen Zubereitungen oder für textile Gewebe.